# EUROPÄISCHE PATENTANMELDUNG

(11) **EP 4 400 351 A1**
(43) Veröffentlichungstag der Anmeldung: **17.07.2024**
(21) Anmeldenummer: 23218973.8
(22) Anmeldetag: 21.12.2023
(51) Int. Cl.: B60K 35/233, B60K 35/28, G08G 1/16

(54) **INFORMATIONSMITTEILUNG UND UNTERSTÜTZUNG EINES FAHRERS EINES FAHRZEUGS BEI EINER GEFAHRENSITUATION MITTELS EINER ERWEITERTEN REALITÄTS-DARSTELLUNG**

(30) Priorität: 10.01.2023 DE 102023200126
(71) Anmelder: VOLKSWAGEN AG, 38440 Wolfsburg (DE)
(72) Erfinder: Schlimme, Hauke Christian, 38100 Braunschweig (DE); Just, Benjamin, 39108 Magdeburg (DE); Bärecke, Dr. Frank, 38444 Wolfsburg (DE)

(57) **Zusammenfassung**

Die Erfindung betrifft ein Verfahren zum Anzeigen von Informationen auf einer Anzeigeeinheit (4) eines Fahrzeugs (2), wobei
- ein Umgebungsbereich (6) des Fahrzeugs (2) mit einer Erfassungseinheit (8) des Fahrzeugs (2) erfasst wird, und
- der erfasste Umgebungsbereich (6) zumindest bereichsweise auf der Anzeigeeinheit (4) angezeigt wird,
- eine Gefahren-Information (11) betreffend eines Zustands des Fahrzeugs (2) und/oder eine Gefahren-Information (12) betreffend eines Zustands eines weiteren Fahrzeugs (13) in dem Umgebungsbereich (6) bereitgestellt wird
- abhängig von der bereitgestellten Gefahren-Information (11) des Zustands des Fahrzeugs (2) und/oder von der bereitgestellten Gefahren-Information (12) des Zustands des weiteren Fahrzeugs (13) und von dem erfassten Umgebungsbereich (6) eine abfahrbare Sicherheits-Trajektorie (14) erzeugt wird, und
- die Sicherheits-Trajektorie (14) in einem Bild (9) auf der Anzeigeeinheit (4), auf dem der Umgebungsbereich (6) angezeigt wird, zusätzlich angezeigt wird.

Des Weiteren betrifft die Erfindung eine Anzeigevorrichtung (3) und ein Fahrzeug (2).

## Beschreibung

Die Erfindung betrifft ein Verfahren zum Anzeigen von Informationen auf einer Anzeigeeinheit eines Fahrzeugs, wobei ein Umgebungsbereich des Fahrzeugs mit einer Erfassungseinheit des Fahrzeugs erfasst wird und der erfasste Umgebungsbereich zumindest bereichsweise auf der Anzeigeeinheit angezeigt wird.

Des Weiteren betrifft die Erfindung eine Anzeigevorrichtung mit einer Anzeigeeinheit und einer Auswerteeinheit. Ebenfalls betrifft die Erfindung ein Verfahren mit einer entsprechenden Anzeigevorrichtung.

Beispielsweise werden vermehrt Fahrerassistenzsysteme und autonome Systeme in Fahrzeugen, insbesondere in hochautomatisierten Fahrzeugen, eingesetzt. Hierbei können beispielsweise Brake-by-Wire-Systeme und Steer-by-Wire-Systeme zum Einsatz kommen. Durch solche Systeme können steigende Anforderungen an eine Leistungsfähigkeit, Sicherheit und Bauraumeffizienz in Fahrzeugen gewährleistet werden. Der Verbau beziehungsweise der Einsatz solcher Systeme fordert eine Rückfallebene. Dies bedeutet, dass die Verzögerung im Falle des Bremssystems bei Ausfall des Primärbremssystems durch ein sekundäres Bremssystem sichergestellt wird. Da die Weiterfahrt in einem möglichen Erstfehlerbetrieb für eine bestimmte Fahrzeit und/oder Fahrstrecke gewährleistet werden soll, bedarf es einer weiteren Redundanz (zweite Rückfallebene, also tertiäres Bremssystem), welche das Fahrzeug nach einem Zweitfehler (Ausfall des sekundären Bremssystems) im Stillstand verzögert und sichert (Notmanöver). Dieses Bremssystem kann beispielsweise durch die E-Maschine, welche generatorisch verzögert realisiert werden. Es wird unterschieden zwischen einem Nominalbetrieb (primäres Bremssystem aktiv), einem Erstfehlerbetrieb (sekundäres Bremssystem aktiv) und einem Zweitfehlerbetrieb (tertiäres Bremssystem aktiv). Analog gilt dies auch für Lenk- oder Antriebssysteme.

Da die Weiterfahrt im Erstfehlerbetrieb einen Eingriff in das Fahrzeugverhalten erfordert (defensive Betriebsstrategie), um die Leistungsfähigkeit im stark degradierten Fahrbetrieb zu konditionieren, ist dies dem Fahrer entsprechend mitzuteilen beziehungsweise anzuzeigen. Dies mit dem Ziel, dem Fahrer ein ausreichendes Verständnis über die Situation zu verschaffen.

Weiterhin stellt ein eingeleitetes Notmanöver im Falle eines Zweitfehlerfalls ein für den Fahrer eventuell plötzlich auftretender Event dar. Der Fahrer kann in diesem Fall mit entsprechenden Informationen und Anweisungen während dieses Notmanövers unterstützt werden. Dies mit dem Ziel, dass das Fahrzeug sicher abgestellt und Unfälle mit der Fahrumgebung vermieden werden können. Hierbei kann eine Fahrumgebung gewarnt werden.

Beispielsweise offenbart die US 11,231,723 B2 ein Verfahren zur Handhabung von Fehlern im Bremssystem von autonom betriebenen Fahrzeugen. Hierbei kann bei einem festgestellten Fehler in einem Bremssystem eines autonom betriebenen Fahrzeugs Sicherheitssignale an ein Kontrollsystem übersendet werden, sodass entsprechende Sicherheitsmaßnahmen für das autonom betriebene Fahrzeug und/oder weiteren Fahrzeugen bereitgestellt werden können.

Aus der US 10,909,629 B1 ist ein System und ein Verfahren offenbart beziehungsweise bekannt, mit welchem die Effizienz eines autonomen Fahrsystems eines autonom betriebenen Fahrzeuges unter Testbedingung bestimmt werden kann. Hierbei können beispielsweise Bremssysteme und Fehlreaktionen darauf getestet beziehungsweise überprüft werden.

Ferner offenbart die CN 110 914 118 A ein Parkbremssystem, mit welchem im Fehlerfall eines weiteren Bremssystems, insbesondere eines Hauptbremssystems, des Fahrzeuges ein Bremsvorgang beispielsweise unterstützt werden kann.

Eine Aufgabe der vorliegenden Erfindung besteht darin, ein Verfahren, eine Anzeigevorrichtung und ein Fahrzeug bereitzustellen beziehungsweise zu schaffen, mit welchen insbesondere dem Fahrzeugfahrer eines Fahrzeugs auf einfache und effiziente Weise Informationen angezeigt werden können, um besser auf ausgehende Gefahren des eigenen Fahrzeuges und/oder anderen Fahrzeugen reagieren zu können.

Diese Aufgabe wird durch ein Verfahren, eine Anzeigevorrichtung und ein Fahrzeug gemäß den unabhängigen Patentansprüchen gelöst. Sinnvolle Weiterbildungen ergeben sich aus den abhängigen Patentansprüchen.

Ein Aspekt der Erfindung betrifft ein Verfahren zum Anzeigen von Informationen auf einer Anzeigeeinheit eines Fahrzeugs, wobei
- ein Umgebungsbereich des Fahrzeugs mit einer Erfassungseinheit des Fahrzeugs erfasst wird, und
- der erfasste Umgebungsbereich zumindest bereichsweise auf der Anzeigeeinheit angezeigt wird,
- eine Gefahren-Information betreffend eines Zustands des Fahrzeugs und/oder eine Gefahren-Information betreffend eines Zustands zumindest eines weiteren Fahrzeugs in dem Umgebungsbereich bereitgestellt wird, wobei mit einer jeweiligen Gefahren-Information eine das Fahrzeug potentiell betreffende Gefahr charakterisiert wird,
- abhängig von der bereitgestellten Gefahren-Information des Zustands des Fahrzeugs und/oder von der bereitgestellten Gefahren-Information des Zustands des weiteren Fahrzeugs und von dem erfassten Umgebungsbereich eine abfahrbare Sicherheits-Trajektorie, mit welcher die das Fahrzeug potentiell betreffende Gefahr zumindest minimiert werden kann, erzeugt wird, und
- die Sicherheits-Trajektorie in einem Bild auf der Anzeigeeinheit, auf dem der Umgebungsbereich angezeigt wird, zusätzlich angezeigt wird.

Durch das vorgeschlagene Verfahren kann einem Fahrer beziehungsweise Fahrzeugführer eines Fahrzeuges auf effiziente und intelligente Art und Weise umfangreiche Informationen angezeigt werden, sodass der Fahrer auf eine von dem Fahrzeug selbst hervorgerufene Gefahr und/oder auf eine von einem weiteren Verkehrsteilnehmer, wie dem weiteren Fahrzeug, ausgehende Gefahr reagieren kann. Folglich kann die Sicherheit des Fahrzeuges und insbesondere des Fahrers und/oder der Insassen des Fahrzeuges erhöht werden, da mithilfe der angezeigten Trajektorie der Fahrer das Fahrzeug derart führen beziehungsweise lenken kann, um das Fahrzeug trotz der potentiellen Gefahr sicher führen beziehungsweise lenken zu können. Beispielsweise kann mithilfe der Sicherheits-Trajektorie dem Fahrzeug eine entsprechende Trajektorie beziehungsweise Fahrstrecke beziehungsweise Fahrzeugführung angezeigt werden, sodass der Fahrer beziehungsweise der Nutzer des Fahrzeuges das Fahrzeug sicher führen und beispielsweise die Gefahr, die vom weiteren Fahrzeug ausgeht, beispielsweise umfahren beziehungsweise ausweichen kann. Des Weiteren kann, wenn die Gefahr von dem eigenen Fahrzeug ausgeht, mithilfe der Sicherheits-Trajektorie das Fahrzeug sicher zum Stillstand manövriert werden.

Insbesondere kann mithilfe des vorgeschlagenen Verfahrens dem Fahrer des Fahrzeuges eine Informationsmitteilung und Unterstützung im Falle von gefährlichen beziehungsweise kritischen Situationen betreffend das eigene Fahrzeug (Ego-Fahrzeug) und/oder von anderen Verkehrsteilnehmern, wie dem weiteren Fahrzeug, bereitgestellt werden. Hierzu erfolgt eine entsprechende Anzeige beziehungsweise Darstellung in dem Bild auf der Anzeigeeinheit.

Mithilfe der Sicherheits-Trajektorie kann vor allem der Fahrer des Fahrzeuges so instruiert beziehungsweise angewiesen werden, sodass auch trotz der potentiellen Gefahr, welche auf das Fahrzeug entstehen kann, zumindest temporär eine sichere Fahrt des Fahrzeugs durchgeführt werden kann. Insbesondere kann mithilfe der Sicherheits-Trajektorie die von dem Fahrzeug selbst oder von dem weiteren Fahrzeug ausgehende Gefahr beziehungsweise Gefährdung entgegengewirkt werden. Optional kann mithilfe der abfahrbaren beziehungsweise fahrbaren Sicherheits-Trajektorie die potentielle Gefahr reduziert beziehungsweise minimiert werden.

Speziell kann mithilfe des vorgeschlagenen Verfahrens die Fahrsicherheit des Fahrzeuges und insbesondere die Fahrsicherheit der Fahrzeuge in der Umgebung des Fahrzeuges auch bei Eintritt eines Fehlerfalls in dem Fahrzeug und/oder dem weiteren Fahrzeug erhöht werden. Beispielsweise kann es sein, dass ein Bremsregelsystem des Fahrzeuges und/oder des weiteren Fahrzeuges ausgefallen ist oder einen Fehler aufweist, sodass eine entsprechende kritische beziehungsweise gefährliche Situation vorliegt. Mithilfe der Sicherheits-Trajektorie kann somit das Fahrzeug im Falle des kritischen Falls des eigenen Bremsregelsystems sicher zum Stillstand gebracht werden. Im Falle, dass das Problem in dem weiteren Fahrzeug vorliegt, so kann mithilfe der Sicherheits-Trajektorie das eigene Fahrzeug so gesteuert beziehungsweise bewegt beziehungsweise manövriert werden, um insbesondere dem weiteren Fahrzeug möglichst sicher ausweichen beziehungsweise umfahren zu können.

Durch die Anzeige der Sicherheits-Trajektorie kann der Fahrzeugfahrer für das Lenken beziehungsweise Steuern des Fahrzeugs visuell unterstützt werden. Insbesondere handelt es sich bei der Anzeigeeinheit des Fahrzeugs um eine im Fahrzeug integrierte Anzeigeeinheit beziehungsweise Display. Beispielsweise kann die Anzeigeeinheit Teil eines Fahrzeugsystems und/oder des Infotainmentsystems sein. Bei der Erfassungseinheit beziehungsweise Erfassungseinrichtung handelt es sich um ein Sensorsystem oder um ein Kamerasystem, welche am oder im Fahrzeug integriert ist. Insbesondere kann mithilfe der Erfassungseinheit des Fahrzeugs der Umgebungsbereich, also die Umgebung, um das Fahrzeug herum erfasst, insbesondere vollständig erfasst, werden. Insbesondere wird mit der Erfassungseinheit der vorausliegende Bereich in der Umgebung des Fahrzeugs erfasst. Speziell kann abhängig von dem erfassten Umgebungsbereich eine aktuelle Verkehrslage beziehungsweise Verkehrssituation und insbesondere der Zustand des zumindest einen weiteren Fahrzeugs erfasst werden.

Die Gefahreninformation betreffend den Zustand des Fahrzeugs und/oder die Gefahreninformation betreffend den Zustand des weiteren Fahrzeugs kann beispielsweise einer Auswerteeinheit, insbesondere elektronischen Auswerteeinheit, zur Verfügung gestellt werden. Hierbei kann die Auswerteeinheit beispielsweise als Cloud, Backend oder dezentrale Servereinheit ausgebildet sein. Die jeweilige Auswertung beziehungsweise Verarbeitung dieser Gefahren-Informationen kann somit entweder im Fahrzeug selbst oder in einer fahrzeugexternen Einheit erfolgen und wiederum dem Fahrzeug zur Verfügung gestellt beziehungsweise übermittelt werden. Die Gefahrensituation betreffend das weitere Fahrzeug kann beispielsweise von dem weiteren Fahrzeug selbst über Kommunikationsverbindungen der Auswerteeinheit und insbesondere dem Fahrzeug zur Verfügung gestellt beziehungsweise übermittelt werden, sodass die Gefahreninformation bezüglich des Zustands des weiteren Fahrzeugs verfügbar ist.

Beispielsweise ist ebenfalls denkbar, dass das Fahrzeug und das weitere Fahrzeug Bestandteil einer Fahrzeugflotte sind, sodass die Fahrzeuge der Fahrzeugflotte untereinander kommunikativ vernetzt sind und insbesondere mit einer übergeordneten Servereinheit der Fahrzeugflotte kommunizieren. Somit können die entsprechenden Informationen in den einzelnen Fahrzeugen, wie zum Beispiel dem Fahrzeug des Fahrzeugfahrers, mitgeteilt werden.

Des Weiteren ist denkbar, dass die Auswerteeinheit beziehungsweise eine Verarbeitungseinheit in einem Fahrzeugsystem des Fahrzeugs integriert ist oder als externe Einheit im Fahrzeug angeordnet ist.

Die Sicherheits-Trajektorie kann abhängig von den Gefahreninformationen und dem Umgebungsbereich von dem Fahrzeug selbst bestimmt werden oder von einem zum Fahrzeug externen Server bestimmt und an das Fahrzeug übermittelt wird.

Insbesondere kann die Sicherheits-Trajektorie in dem Bild auf der Anzeigeeinheit so angezeigt beziehungsweise dargestellt werden, dass der Fahrzeugfahrer und/oder der Nutzer des Fahrzeugs frühzeitig auf die von dem Fahrzeug und/oder dem weiteren Fahrzeug ausgehende Gefahr informiert werden kann und somit frühzeitig darauf reagieren kann durch Abfahren der Sicherheits-Trajektorie.

Bei dem Fahrzeug handelt es sich beispielsweise um ein Kraftfahrzeug oder einen Lastkraftwagen oder um ein Hybridfahrzeug oder um ein zumindest teilweise autonom betriebenes Fahrzeug.

In einem Ausführungsbeispiel ist vorgesehen, dass die Sicherheits-Trajektorie charakterisierendes Trajektorien-Hilfssymbol als erweiterte Realität kontaktanalog in einem Bild auf der Anzeigeeinheit, auf der der Umgebungsbereich mit einem fahrbaren Abschnitt einer Fahrbahn, auf welcher sich das Fahrzeug bewegt, überlagert angezeigt wird. Darüber hinaus kann das Trajektorien-Hilfssymbol kontinuierlich auf der Anzeigeeinheit, insbesondere einem Head-up-Display des Fahrzeugs, angezeigt werden. Mithilfe der Anzeigeeinheit, welche als Head-up-Display ausgebildet sein kann, kann das Trajektorien-Hilfssymbol auf einer Windschutzscheibe des Fahrzeugs eingeblendet beziehungsweise projiziert werden. Insbesondere erfolgt die Anzeige des Trajektorien-Hilfssymbols so, dass der Nutzer des Fahrzeugs oder der Fahrzeugführer des Fahrzeugs eine Kopfhaltung beziehungsweise eine Blickrichtung beibehalten kann. Insbesondere handelt es sich bei der Anzeigeeinheit um ein AR-Head-up-Display, speziell um ein Head-up-Display mit der Technik der "erweiterten Realität" (englisch: Augmented Reality - AR). Insbesondere kann mithilfe der Anzeigeeinheit die Anzeige des Trajektorien-Hilfssymbols kontaktanalog mit dem Bild auf der Anzeigeeinheit überlagert angezeigt beziehungsweise eingeblendet werden. Insbesondere erfolgt die Anzeige des Trajektorien-Hilfssymbols nach Art der erweiterten Realität entsprechend kontaktanalog zu einem oder mehrere Objekte in dem Umgebungsbereich des Fahrzeugs. Insbesondere wird mithilfe der kontaktanalogen Anzeige des Trajektorien-Hilfssymbols eine entsprechende Anzeige direkt innerhalb beziehungsweise als Teil der Umwelt des Fahrzeugs dargestellt. Dadurch sind insbesondere äußerst schnelle und intuitive Interpretationen für den Nutzer oder Fahrzeugführer des Fahrzeugs möglich.

Speziell kann mit dem Trajektorien-Hilfssymbol eine Information über die Trajektorie für den Fahrer in dem fahrbaren Abschnitt bildhaft dargestellt werden. Insbesondere kann mithilfe der kontaktanalogen Anzeige des Trajektorien-Hilfssymbols eine virtuelle Einblendung der Sicherheits-Trajektorie bei der Fahrt des Fahrzeugs kontinuierlich kontaktanalog auf der Anzeigeeinheit angezeigt werden. Insbesondere kann mithilfe der kontaktanalogen Anzeige eine virtuelle Einblendung der Trajektorie in der realen Umwelt des Fahrzeuges durchgeführt werden. Somit kann der Nutzer beziehungsweise der Fahrzeugfahrer eine verbesserte Wahrnehmung bezüglich der abzufahrenden Sicherheits-Trajektorie ermöglichen beziehungsweise dargelegt werden.

Mithilfe eines Head-up-Displays können Informationen auf einer Windschutzscheibe des Fahrzeugs projiziert und angezeigt werden. Ein Head-up-Display hat den Vorteil, dass ein Bild des Head-up-Displays näher an der realen Welt beziehungsweise Umwelt erscheint. Bei diesem Head-up-Display handelt es sich eigentlich um eine Produktionseinheit, die ein Bild auf der Windschutzscheibe des Fahrzeugs projiziert. Das Bild befindet sich aus der Sicht des Fahrers je nach Bauart des Head-up-Displays wenige Meter bis mehrere Meter vor dem Fahrzeug. Dies hat den Vorteil, dass die eingeblendeten Informationen so präsentiert werden, dass die Augen des Fahrers selbst entlastet werden können. Insbesondere kann bei Head-up-Displays der Nutzer seine Kopfhaltung beziehungsweise seine Blickrichtung beibehalten, weil die dargestellten Informationen in seinem Sichtfeld projiziert werden können.

Des Weiteren ist denkbar, dass die als Head-up-Display ausgebildete Anzeigeeinheit mit einem Navigationssystem, insbesondere des Fahrzeugs, verknüpft ist. Dadurch können die Informationen des Navigationssystems in dem Bild des Head-up-Displays beziehungsweise der Anzeige dem Fahrzeugführer angezeigt werden. Dadurch muss der Fahrzeugführer nicht auf das eigentliche Display des Navigationssystems blicken, sondern er erhält Informationen über das Head-up-Display an der Windschutzscheibe.

Für das Erzeugen der Sicherheits-Trajektorie können zusätzliche Informationen des Navigationssystems des Fahrzeugs und/oder Kartendaten von externen Systemen beziehungsweise Informationsquellen verwendet werden.

Eine weitere Möglichkeit für die Anzeige der Sicherheits-Trajektorie ist die Verwendung einer AR-Brille oder eines AR-Displays als Anzeigeeinheit.

In einem Ausführungsbeispiel ist vorgesehen, dass die Sicherheits-Trajektorie mittels der erweiterten Realität so auf der Anzeigeeinheit dargestellt wird, dass die Sicherheits-Trajektorie ortsfest auf dem angezeigten Fahrbahnabschnitt der Fahrbahn eingeblendet wird, sodass das Fahrzeug das Trajektorien-Hilfssymbol fiktiv überfährt. Folglich kann dem Nutzer des Fahrzeugs das Trajektorien-Hilfssymbol ortsfest auf dem Fahrbahnabschnitt der Fahrbahn eingeblendet werden. Speziell kann dadurch dem Nutzer das Trajektorien-Hilfssymbol so angezeigt werden, dass das Trajektorien-Hilfssymbol für den Nutzer des Fahrzeugs als Teil der Fahrbahn beziehungsweise des Fahrbahnabschnitts erscheint. Dadurch kann insbesondere das Trajektorien-Hilfssymbol wie ein aufgemaltes Verkehrssymbol auf dem Fahrbahnabschnitt der Fahrbahn, insbesondere virtuell, dargestellt werden. Folglich kann der Fahrer beziehungsweise der Nutzer das Trajektorien-Hilfssymbol schnellstmöglich wahrnehmen und daraufhin reagieren.

Insbesondere wird das Trajektorien-Hilfssymbol als virtueller Bestandteil auf dem Fahrbahnabschnitt der Fahrbahn dargestellt. Dadurch kann das Trajektorien-Hilfssymbol als Teil der Umwelt in einem Umgebungsbereich des Fahrzeugs virtuell angezeigt werden. Insbesondere kann dadurch das Trajektorien-Hilfssymbol so auf dem Fahrbahnabschnitt der Fahrbahn eingeblendet werden, dass der Nutzer des Fahrzeugs ähnlich einer Fahrbahnmarkierung es überfahren kann. Somit kann die abzufahrende beziehungsweise zu befahrende Trajektorie beziehungsweise Sicherheitstrajektorie dem Nutzer beziehungsweise Fahrzeugfahrer besser dargestellt beziehungsweise angezeigt werden.

In einem Ausführungsbeispiel ist vorgesehen, dass das Trajektorien-Hilfssymbol auf der Anzeigeeinheit mittels der erweiterten Realität soweit angesteuert wird, dass sich dieses vor dem Fahrzeug auf dem angezeigten Fahrbahnabschnitt der Fahrbahn bewegungsgekoppelt zur Fortbewegung des Fahrzeugs mit dem Fahrzeug mitbewegt. Dadurch kann dem Nutzer des Fahrzeugs das Trajektorien-Hilfssymbol permanent vor dem Fahrzeug auf dem Fahrbahnabschnitt der Fahrbahn virtuell eingeblendet werden. Dadurch erfährt der Nutzer des Fahrzeugs ständig die aktuell zu befahrene Trajektorie beziehungsweise Sicherheits-Trajektorie.

Beispielsweise kann das Trajektorien-Hilfssymbol als Pfeil, Richtungspfeil, Dreiecke oder Richtungsmarkierungen auf dem Fahrbahnabschnitt kontaktanalog in dem Bild dargestellt werden. Insbesondere kann durch die Anzeige des Trajektorien-Hilfssymbols auf dem Fahrbahnabschnitt der Fahrbahn bewegungsgekoppelt zur Fortbewegungsfahrt eine permanente Visualisierung der bevorstehenden abzufahrenden Trajektorie beziehungsweise Sicherheits-Trajektorie bereitgestellt werden. Insbesondere kann das Trajektorien-Hilfssymbol so dargestellt werden, als würde sich dieses analog zum Fahrzeug auf dem Fahrbahnabschnitt der Fahrbahn mitbewegen.

In einem Ausführungsbeispiel ist vorgesehen, dass abhängig von den bereitgestellten Gefahren-Informationen des Zustands des Fahrzeugs und/oder von der bereitgestellten Gefahren-Information des Zustands des weiteren Fahrzeugs und von dem erfassten Umgebungsbereich ein Haltepunkt, an welchem das Fahrzeug durch Abfahren der Sicherheits-Trajektorie sicher abgestellt werden kann, bestimmt wird, wobei ein den Haltepunkt charakterisierendes Haltepunkt-Hilfssymbol als erweiterte Realität kontaktanalog einem Bild auf der Anzeigeeinheit überlagert angezeigt wird. Folglich kann neben der abzufahrenden beziehungsweise der Sicherheits-Trajektorie auch der Haltepunkt beziehungsweise ein Haltebereich bestimmt werden. Durch Abfahren der Sicherheits-Trajektorie kann der Haltepunkt erreicht werden. Beispielsweise kann es sich bei dem Haltepunkt um einen Nothaltepunkt handeln.

In Abhängigkeit von den Gefahren-Informationen, dem erfassten Umgebungsbereich und/oder von Navigations- beziehungsweise Kartendaten kann zu der jeweiligen aktuell vorliegenden Situation hinsichtlich der potentiellen Gefahr ein sicherer Haltepunkt ermittelt werden und dieser zusätzlich in dem Bild angezeigt werden. Somit erfährt der Fahrer vor allem neben der abzufahrenden Trajektorie auch, wo er das Fahrzeug hin manövrieren beziehungsweise bewegen soll, um es dort sicher abstellen zu können. Dies ist vor allem dann von Vorteil, wenn das eigene Fahrzeug einen Fehlerfall beziehungsweise einen kritischen Zustand aufweist, so kann die Sicherheits-Trajektorie den Nutzer anleiten beziehungsweise instruieren, zu einem sicheren Haltepunkt beziehungsweise Haltebereich zu fahren, um dort das Fahrzeug sicher parken beziehungsweise abstellen zu können. Der Haltepunkt kann des Weiteren wie das Trajektorien-Hilfssymbol als Haltepunkt-Hilfssymbol ebenfalls kontaktanalog in dem Bild angezeigt werden. Somit hat der Nutzer ebenfalls ein Blickfeld neben der virtuellen Darstellung der Trajektorie auch eine virtuelle Darstellung des Haltepunktes. Somit wird dem Nutzer vor allem in einer Notsituation beziehungsweise einer Notfallsituation die entsprechenden Informationen beziehungsweise Anweisungen gegeben, um das Fahrzeug sicher weitersteuern beziehungsweise weiterbewegen zu können.

Die Möglichkeiten zur Darstellung beziehungsweise Anzeige des Haltepunkt-Hilfssymbols können analog zu der Darstellung beziehungsweise Anzeige des Trajektorien-Hilfssymbols erfolgen.

In einem Ausführungsbeispiel ist vorgesehen, dass mit dem Zustand des Fahrzeugs ein Fehlerfall zumindest eines Fahrzeugsystems des Fahrzeugs charakterisiert wird, wobei die Gefahren des Zustands bestimmt werden, indem der Fehlerfall des zumindest einen Fahrzeugsystems des Fahrzeugs beurteilt wird. Zusätzlich kann der Fehlerfall dahingehend beurteilt werden, ob eine Notfallsituation des Fahrzeugs vorliegt, insbesondere ein Warnhinweis betreffend die Notfallsituation in dem Bild kann auf der Anzeigeeinheit zusätzlich angezeigt werden.

Beispielsweise kann das Fahrzeug bei einem Fahrerassistenzsystem, Bremssystem oder einem Lenkunterstützungssystem Probleme und insbesondere einen Fehlerfall aufweisen. Hierbei kann zunächst das Fahrzeugsystem, welches einen Fehlerfall aufweist oder sogar ausgefallen ist, festgestellt werden, anschließend kann abhängig davon der Fehlerfall analysiert beziehungsweise beurteilt werden, festzustellen, wie schwer beziehungsweise wie kritisch der Fehlerfall ist. Dementsprechend kann wiederum die Sicherheits-Trajektorie auf Basis dieser Informationen beziehungsweise dieses Beurteilungsergebnisses erzeugt werden. Sollte beispielsweise das Bremssystem einen Fehlerfall aufweisen oder zumindest teilweise beeinträchtigt sein, so kann mithilfe der Sicherheits-Trajektorie dem Fahrer des Fahrzeugs ein sicherer Anhalteweg des Fahrzeugs dargelegt beziehungsweise angezeigt werden. Somit wird in einem Fehlerfall beziehungsweise in einem fehlerhaften Zustand des Fahrzeuges der Fahrer sicher instruiert, um das Fahrzeug sicher steuern und insbesondere zum Stillstand bewegen zu können.

Das Beurteilen des Fehlerfalls und das Bestimmen der Gefahren-Information können beispielsweise mithilfe der Auswerteeinheit erfolgen.

Des Weiteren kann der Fehlerfall dahingehend beurteilt werden, ob eine entsprechende Notsituation beziehungsweise Notfallsituation des Fahrzeugs vorliegt. Sollte beispielsweise festgestellt werden, dass für einen sicheren Betrieb des Fahrzeugs essentielle Systeme beziehungsweise Sicherheitssysteme ausgefallen sind, so sollte die Sicherheits-Trajektorie so bestimmt werden, dass das Fahrzeug schnellstmöglich und dennoch sicher zum Stillstand bewegt werden kann.

Des Weiteren kann der zumindest eine Warnhinweis oder mehrere Warnhinweise betreffend die Notfallsituation und/oder betreffend die Gefahreninformation zusätzlich in dem Bild angezeigt werden. Hierbei können dem Nutzer Anweisungen, was er in der Notfallsituation zu tun hat, zusätzlich in dem Bild angezeigt werden. Des Weiteren können mit dem Warnhinweis dem Nutzer der vorliegende Fehlerfall beziehungsweise die vorliegende Notfallsituation näher erläutert werden.

Des Weiteren denkbar ist, dass mithilfe des Warnhinweises dem Nutzer zusätzlich über akustische und/oder haptische Rückmeldungen entsprechende Warnungen im Fahrzeug ausgegeben werden, sodass beispielsweise je nach Gefahrenstufe beziehungsweise Dringlichkeit der Notfallsituation der Nutzer über diese Situation aufmerksam gemacht wird.

Beispielsweise kann in dem Bild als Warnhinweis dem Nutzer ausgegeben werden, dass das Bremssystem oder anderweitiges Fahrzeugsystem ausgefallen ist und was der Nutzer nun zu tun hat, um das Fahrzeug sicher zum Stillstand zu bringen.

Der Warnhinweis kann ebenfalls als Hilfssymbol kontaktanalog in dem Bild auf der Anzeige angezeigt werden.

In einem Ausführungsbeispiel ist vorgesehen, dass mit dem Zustand des weiteren Fahrzeugs eine Notfallsituation des weiteren Fahrzeugs charakterisiert und mit der Gefahreninformation bereitgestellt wird. Eine Warnsituation betreffend die Notfallsituation des weiteren Fahrzeugs in dem Bild auf der Anzeigeeinheit zusätzlich angezeigt wird. Beispielsweise kann von dem weiteren Fahrzeug selbst oder von einem übergeordneten System der Zustand des weiteren Fahrzeugs und/oder ein Zustand eines Fahrzeugsystems des weiteren Fahrzeugs an das Fahrzeug und/oder an die Auswerteeinheit übermittelt werden. Hierbei kann vor allem mitgeteilt werden, ob der Zustand des weiteren Fahrzeugs kritisch, also gefährlich, ist und ob Gegenmaßnahmen entsprechend durchgeführt werden sollten durch den Fahrer des Fahrzeugs.

Beispielsweise kann bei der Notfallsituation des weiteren Fahrzeugs ein fahrzeugseitiger Fehler beziehungsweise Fehlerfall vorliegen, wie zum Beispiel ein defektes Bremssystem oder es kann vorkommen, dass der Fahrer des weiteren Fahrzeugs aktuell nicht mehr in der Lage ist, das weitere Fahrzeug sicher zu steuern. Dies kann beispielsweise vorkommen, wenn der Fahrer des weiteren Fahrzeugs eingeschlafen oder einen gesundheitlichen Notfall erlitten hat. In diesem Fall kann mithilfe der Warninformation dem Fahrer des Fahrzeugs visuell mitgeteilt werden, dass das weitere Fahrzeug eine Gefahr darstellt und diese zu berücksichtigen ist. Hierzu kann wiederum mithilfe der Sicherheits-Trajektorie dem Nutzer auf der Anzeigeeinheit angezeigt werden, wie der Fahrer des Fahrzeugs das weitere Fahrzeug am besten ausweichen beziehungsweise aus dem Weg gehen kann, sodass es zu keiner gefährlichen Kollision beziehungsweise Unfall kommen kann.

Beispielsweise kann ein die Warninformation charakterisierendes Hilfssymbol ebenfalls kontaktanalog mittels der erweiterten Realität in dem Bild auf der Anzeige angezeigt werden.

In einem Ausführungsbeispiel ist vorgesehen, dass mit der Gefahren-Information des Zustands des weiteren Fahrzeugs zusätzlich eine Positionsinformation und/oder eine Bewegungsrichtungsinformation des weiteren Fahrzeugs bereitgestellt wird, wobei die Positionsinformation und/oder die Bewegungsrichtungsinformation in einem Bild auf der Anzeigeeinheit zusätzlich angezeigt wird. Zusätzlich kann ein die Positionsinformation charakterisierendes Positions-Hilfssymbol und/oder ein die Bewegungsrichtungsinformation charakterisierendes Bewegungsrichtungs-Hilfssymbol als erweiterte Realität kontaktanalog in einem Bild auf der Anzeigeeinheit überlagert angezeigt werden.

Folglich kann dem Nutzer des Fahrzeuges in dem Bild zum einen angezeigt werden, wo sich das gefährliche beziehungsweise kritische weitere Fahrzeug befindet, sodass der Nutzer dies schnell und effizient wahrnehmen kann. Des Weiteren kann mithilfe des Bewegungsrichtungs-Hilfssymbols dem Nutzer in dem Bild angezeigt werden, in welche Richtung das weitere Fahrzeug fährt. Somit kann dem Nutzer visuell dargestellt beziehungsweise angezeigt werden, wo sich das weitere Fahrzeug befindet und ob sich das weitere Fahrzeug dem Fahrzeug nähert. Beispielsweise kann mit der Bewegungsrichtungs-Hilfsinformation angezeigt werden, dass sich das weitere Fahrzeug von links oder rechts dem Fahrzeug nähert beispielsweise. Dementsprechend kann zusätzlich zu dem zu der angezeigten Sicherheits-Trajektorie dargestellten Hilfssymbol angezeigt werden, aus welcher Richtung sich das weitere Fahrzeug nähert, sodass der Fahrer des Fahrzeuges weiß, wie er sich zu verhalten hat beziehungsweise wie er sein beziehungsweise das Fahrzeug zu steuern hat.

Beispielsweise kann sich das weitere Fahrzeug in Bezug zu dem eigenen Fahrzeug auf der entgegengesetzten Fahrbahn, insbesondere auf der zum Fahrzeug linken Fahrbahn, nähern. In diesem Fall kann mithilfe der Hilfssymbole dem Nutzer angezeigt werden, dass er möglichst weit rechts auf seiner Fahrbahn fahren sollte, um sich möglichst weit von dem weiteren Fahrzeug zu entfernen und somit einen Sicherheitspuffer beziehungsweise Sicherheitsabstand einhalten zu können.

Ein weiterer Aspekt der Erfindung betrifft eine Anzeigevorrichtung mit einer Anzeigeeinheit und einer Auswerteeinheit, wobei die Anzeigevorrichtung zum Durchführen eines Verfahrens nach einem der vorhergehenden Aspekte oder einer Weiterbildung davon ausgebildet ist.

Insbesondere kann mithilfe der soeben geschilderten Anzeigevorrichtung ein Verfahren nach dem vorherigen Aspekt oder einer vorteilhaften Weiterbildung davon ausgeführt werden.

Beispielsweise kann die Anzeigevorrichtung als eigenständige Einheit für ein Fahrzeug ausgebildet sein. Des Weiteren kann die Anzeigevorrichtung Teil eines Fahrerassistenzsystems und/oder eines Anzeigesystems eines Fahrzeugs sein.

Des Weiteren kann die Anzeigevorrichtung als dezentrales Teil beziehungsweise Einheit ausgebildet sein, sodass zumindest Teile der Anzeigevorrichtung im Fahrzeug angeordnet sind, wie die Anzeigeeinheit und beispielsweise die Auswerteeinheit zum Fahrzeug als ausgelagerte beziehungsweise externe Einheit ausgebildet ist.

Ein weiterer Aspekt der Erfindung betrifft ein Fahrzeug mit einer Anzeigevorrichtung nach dem vorherigen Aspekt.

Insbesondere kann das Fahrzeug beziehungsweise das Kraftfahrzeug die vorhin geschilderte Anzeigevorrichtung aufweisen.

Ausführungsbeispiele eines Aspekts sind als vorteilhafte Ausführungsbeispiele für die anderen Aspekte und umgekehrt anzusehen.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Zu der Erfindung gehören auch Weiterbildungen der erfindungsgemäßen Anzeigevorrichtung und des Fahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Anzeigevorrichtung und des Fahrzeugs hier nicht noch einmal beschrieben.

Die Erfindung umfasst auch die Kombinationen der Merkmale der beschriebenen Ausführungsformen.

Im Folgenden werden Ausführungsbeispiele der Erfindung beschrieben. Hierzu zeigt:
- Fig. 1:: eine schematische Darstellung eines Cockpits eines Fahrzeugs mit einer Anzeigevorrichtung;
- Fig.2:: eine schematische Darstellung aus Sicht eines Fahrers des Fahrzeugs aus der Fig. 1, wobei hier Informationen mittels der erweiterten Realität in dem Sichtfeld des Fahrers eingeblendet werden;
- Fig:3:: eine weitere schematische Ausführung der Darstellung von Informationen mittels der erweiterten Realität der Anzeigevorrichtung aus Fig. 1; und
- Fig.4:: ein weiteres Ausführungsbeispiel einer Darstellung von Informationen mittels der erweiterten Realität mit der Anzeigevorrichtung aus Fig. 1.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

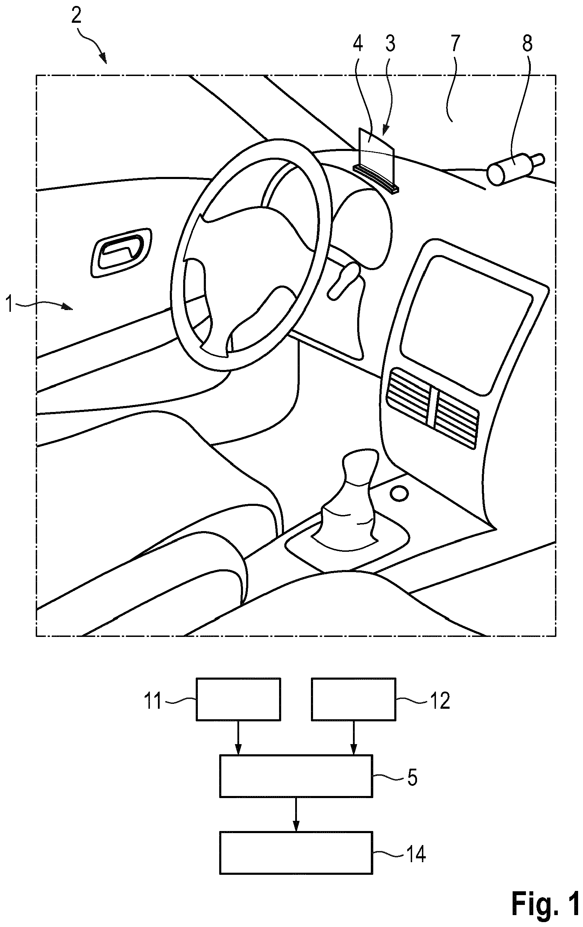

Die Fig. 1 zeigt beispielsweise ein Cockpit 1 eines Fahrzeugs 2. Bei dem Fahrzeug 2 kann es sich beispielsweise um ein Kraftfahrzeug oder um einen Personenkraftwagen oder um einen Lastkraftwagen handeln. Beispielsweise weist das Cockpit 1 des Fahrzeugs 2 eine Anzeigevorrichtung 3 auf. Die Anzeigevorrichtung 3 kann beispielsweise eine Anzeigeeinheit 4 und eine Auswerteeinheit 5 aufweisen. Beispielsweise kann die Auswerteeinheit 5 als eigenständiges System im Fahrzeug 2 integriert sein. Des Weiteren kann die Auswerteeinheit 5 in einer weiteren Ausführungsform eine zum Fahrzeug 2 separate Einheit, wie zum Beispiel ein Backend oder ein cloudbasiertes System sein.

Bei der Anzeigeeinheit 4 handelt es sich beispielsweise um ein Head-up-Display. Mithilfe des Head-up-Displays als Anzeigeeinheit 4 kann insbesondere eine Information im Sichtfeld eines Fahrzeugfahrers oder Nutzers des Fahrzeugs 2 visuell dargestellt werden. Insbesondere erfolgt die Einblendung von Informationen mithilfe des Head-up-Displays auf einer Windschutzscheibe 7 beziehungsweise Frontscheibe des Fahrzeugs 2.

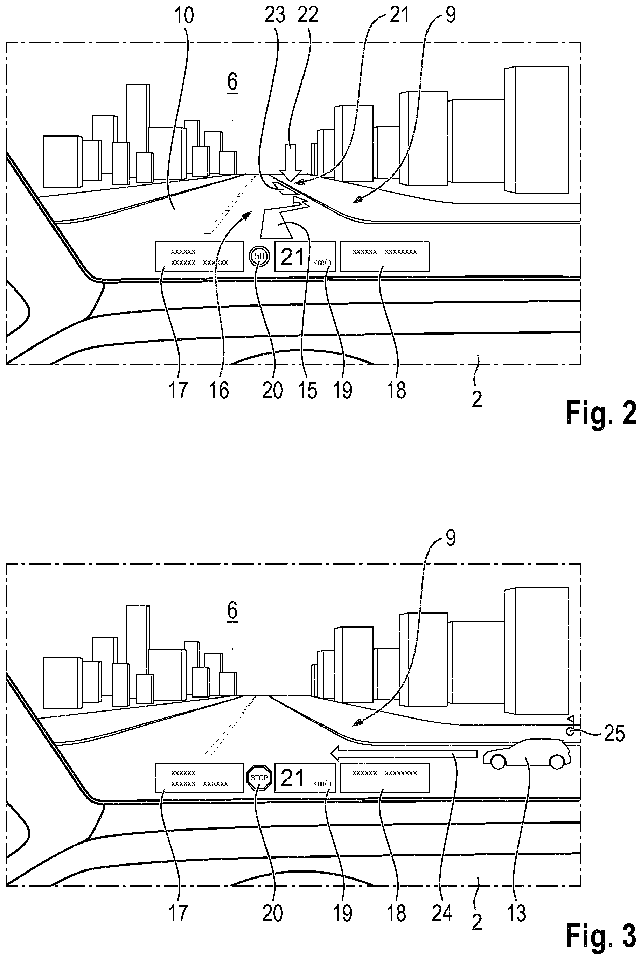

Beispielsweise kann das Fahrzeug 2 eine Erfassungseinheit 8 aufweisen, mit welcher ein Umgebungsbereich 6 (vergleiche Fig. 2) des Fahrzeugs 2 beziehungsweise eine Umgebung des Fahrzeugs 2 erfasst werden kann.

Bei der Erfassungseinheit 8 beziehungsweise einer Erfassungseinrichtung kann es sich beispielsweise um eine Kameraeinheit, eine Sensoreinheit oder um ein Erfassungssystem, wie zum Beispiel ein Umfelderfassungssystem, handeln.

Die Fig. 2 zeigt eine schematische Darstellung eines Bilds 9 des aktuellen Umgebungsbereichs 6 des Fahrzeugs 2. Das Bild 9 kann auf der Anzeigeeinheit 4 angezeigt werden. Insbesondere erfolgt die Anzeige des Bilds 9 mittels des Head-up-Displays als Anzeigeeinheit 4 auf der Windschutzscheibe 7 des Fahrzeugs 2. Bei dem Bild 9 kann es sich beispielsweise um eine Projektion in einem Sichtfeld des Nutzers oder des Fahrzeugfahrers an der Windschutzscheibe 7 handeln.

Beispielsweise kann das Head-up-Display eine bildgebende Einheit, ein Optikmodul und eine Projektionsfläche aufweisen. Die bildgebende Einheit erzeugt speziell das Bild 9. Das Optikmodul leitet das Bild 9 auf die Projektionsfläche beziehungsweise Bildebene. Die Fläche ist eine spiegelnde, lichtdurchlässige Scheibe, wie die Windschutzscheibe 7. Der Fahrzeugfahrer beziehungsweise Nutzer sieht also die gespiegelten Informationen der bildgebenden Einheit und gleichzeitig die reale Welt hinter der Windschutzscheibe 7.

Insbesondere zeigt die Fig. 2 ein Ausführungsbeispiel bei einer Fortbewegungsfahrt des Fahrzeugs 2 entlang einer Fahrbahn 10. Insbesondere ist in diesem Beispiel die Fortbewegungsfahrt auf der Fahrbahn 10 innerhalb einer Stadt bildhaft dargestellt.

Insbesondere kann der Umgebungsbereich 10 des Fahrzeugs 2 mit der Erfassungseinheit 8 während der Fahrt, also kontinuierlich, erfasst werden. Der erfasste Umgebungsbereich 6 kann zumindest bereichsweise in dem Bild 9 auf der Anzeigeeinheit 4 angezeigt beziehungsweise dargestellt werden.

Mithilfe der Anzeigeeinheit 4 kann dem Nutzer oder Fahrzeugfahrer des Fahrzeugs 2 sicherheitsrelevante und unterstützende Informationen angezeigt werden. Diese dienen insbesondere dazu, den Fahrzeugfahrer beim Führen beziehungsweise Lenken des Fahrzeugs 2 unterstützen zu können und ihm somit eine Hilfsstellung und eine Hilfsunterstützung zu geben. Dies erfolgt vorteilhaft dann, wenn eine Gefahrensituation beziehungsweise eine kritische Situation, wie zum Beispiel eine kritische Verkehrssituation, vorliegt.

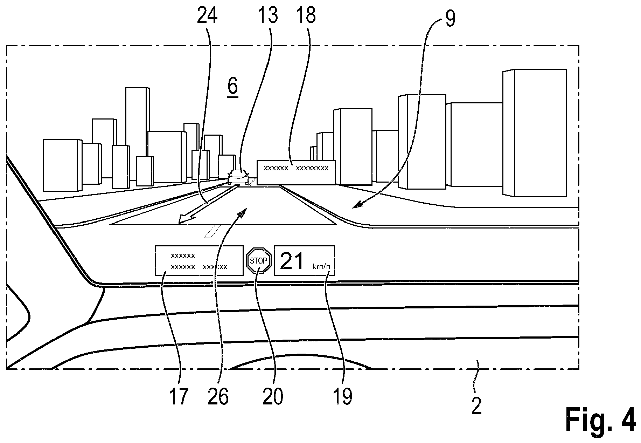

Hierzu kann vor allem der Auswerteeinheit 5 eine Gefahren-Information 11 (vergleiche Fig. 1) betreffend einen Zustand des Fahrzeugs 2 und/oder eine Gefahren-Information 12 (vergleiche Fig. 1) betreffend einen Zustand zumindest eines weiteren Fahrzeugs 13 (vergleiche Fig. 3 oder 4) in dem Umgebungsbereich 6. Diese Informationen 11, 12 können beispielsweise der Auswerteeinheit 5 übermittelt beziehungsweise übertragen werden. Ebenfalls denkbar ist, dass die Auswerteeinheit 5 diese Informationen 11, 12 abruft.

Ebenso denkbar ist, dass weitere Informationen bezüglich anderweitiger Verkehrsteilnehmer in dem Umgebungsbereich 10 der Auswerteeinheit 5 zur Verfügung gestellt beziehungsweise übertragen werden.

Ebenfalls denkbar ist, dass mithilfe der Erfassungseinheit 8 die Umgebung beziehungsweise ein Umgebungsbereich 6 entsprechend analysiert beziehungsweise überwacht, detektiert wird.

Beispielsweise kann mithilfe der Informationen 11, 12 und dem erfassten Umgebungsbereich 6, beziehungsweise einer Information betreffend den Umgebungsbereich 6, eine Sicherheits-Trajektorie 14 (vergleiche Fig. 1) generiert beziehungsweise erzeugt werden. Dies kann durch die Auswerteeinheit 5, welche insbesondere als elektronische Auswerteeinheit bezeichnet werden kann, erfolgen.

Mithilfe der Sicherheits-Trajektorie 14 kann vor allem dem Fahrer beziehungsweise Nutzer des Fahrzeugs 2 abhängig von einer potentiellen Gefahr ausgehend von dem Fahrzeug 2 oder dem weiteren Fahrzeug 13 zumindest eine Sicherheitsmaßnahme zum Steuern beziehungsweise Lenken des Fahrzeugs 2 zur Verfügung gestellt werden. Somit kann der Nutzer des Fahrzeugs 2 das Fahrzeug so steuern beziehungsweise lenken, dass eine solche potentielle Gefahr zumindest minimiert beziehungsweise reduziert werden kann, sodass vor allem Kollisionen vermieden werden können. Diese Information kann mithilfe der Anzeigeeinheit 4 in dem Bild 9 zusätzlich angezeigt werden.

Um die Informationen und insbesondere die Sicherheits-Trajektorie 14 effizient und auf intelligente Art und Weise anzeigen zu können, kann ein die Sicherheits-Trajektorie charakterisierendes Trajektorien-Hilfssymbol 15 als erweiterte Realität kontaktanalog in dem Bild 9 auf der Anzeigeeinheit 4, auf der der Umgebungsbereich mit einem Fahrbahnabschnitt 16, auf welcher sich das Fahrzeug 2 bewegt, überlagert angezeigt wird. Somit erfolgt hier eine virtuelle, zusätzliche Darstellung der Sicherheits-Trajektorie 15 in dem Bild 9 mithilfe des Hilfssymbols 15. Dadurch kann vor allem der Fahrer des Fahrzeugs 2 auf einfachste Art und Weise in Erfahrung gelangen, wie er ausgehend von der Gefahr beziehungsweise von der kritischen Verkehrssituation und/oder anderweitigen gefährlichen Situation das Fahrzeug 2 zu steuern beziehungsweise zu lenken hat. Mithilfe des Hilfssymbols 15 kann also dem Fahrzeugfahrer visuell auf dem Fahrbahnabschnitt 16 angezeigt werden, entlang welchem Bewegungspfad beziehungsweise entlang welchem Streckenverlauf beziehungsweise entlang welcher Trajektorie er das Fahrzeug 2 zu bewegen beziehungsweise zu steuern hat.

Das Trajektorien-Hilfssymbol 15 kann so in dem Bild 9 angezeigt werden, dass der Fahrzeugfahrer beziehungsweise Nutzer den Umgebungsbereich 6 ohne Beeinträchtigung wahrnehmen kann.

Beispielsweise kann es sich bei dem Trajektorien-Hilfssymbol 15 um eine semitransparente Anzeige auf der Anzeigeeinheit 4 handeln.

Beispielsweise kann die Sicherheits-Trajektorie 15 mittels der erweiterten Realität so angezeigt werden, dass die Sicherheits-Trajektorie ortsfest auf dem Fahrbahnabschnitt 16 eingeblendet wird, sodass das Fahrzeug 2 dieses Hilfssymbol 15 fiktiv überfahren kann. Zusätzlich oder anstatt kann des Weiteren das Trajektorien-Hilfssymbol so dargestellt werden, dass dies vor dem Fahrzeug auf dem Fahrbahnabschnitt 16 bewegungsgekoppelt zur Fortbewegungsfahrt des Fahrzeugs 2 mit dem Fahrzeug 2 mitbewegt wird. Somit kann in diesem Fall der Fahrzeuglenker stets die abzufahrende Sicherheits-Trajektorie 14 in dem Bild 9 sehen.

Insbesondere ist in der Fig. 2 ein Ausführungsbeispiel der Erfindung dargestellt, bei welchem zumindest ein Fahrzeugsystem und/oder zumindest eine Fahrzeugkomponente des Fahrzeugs 2 einen Fehler beziehungsweise einen Fehlerfall aufweist. Dies kann wiederum mit der Gefahren-Information 11 bereitgestellt werden. Beispielsweise kann es sich bei dem Fahrzeugsystem des Fahrzeugs 2 um ein Bremssystem handeln. Dieses kann beispielsweise defekt beziehungsweise ausgefallen sein. Zusätzlich kann wiederum ein redundantes weil untergeordnetes Bremssystem ebenfalls defekt und/oder ausgefallen sein, sodass ein Zweitfehlerfall vorliegt. Hierzu kann beispielsweise ein Notmanöver beziehungsweise eine Nothaltefunktion eingeleitet beziehungsweise initiiert werden. Bei dem Zweitfehlerfall kann eine Verzögerung einen Stillstand generatorisch, mithilfe einer E-Maschine des Fahrzeugs 2 erfolgen. Dementsprechend kann hier also beim Eintritt des Zweitfehlerfalls und somit der sofortigen Einleitung eines Notmanövers, wie einer Notfallsituation, eine sicher abfahrbare Trajektorie, also die Sicherheits-Trajektorie 14, über beispielsweise Kartendaten, einer aktuellen Position des Fahrzeugs 2 und eines geschätzten Verzögerungswegs in Abhängigkeit von der Leistungsfähigkeit des generatorischen Verzögerns, berechnet werden. Diese kann dem Fahrer kommuniziert werden und beispielsweise im Augmented-Reality-Display, also der Anzeigeeinheit 4, eingeblendet werden. Dies erfolgt mithilfe des Trajektorien-Hilfssymbols 15. Somit kann mithilfe von Mensch-Maschine-Interaktions-Maßnahmen, wie die erweiterte Realitäts-Darstellung, der Fahrer für das sichere Nothalten des Fahrzeugs 2 instruiert werden.

Um vor allem den Fahrer während dieser Notfallsituation, also hier speziell das ausgefallene Bremssystem, mehr unterstützen zu können, können weitere Informationen mithilfe der Anzeigeeinheit 4 angezeigt werden. Hierzu kann vor allem zumindest ein Warnhinweis beziehungsweise eine Verhaltensanweisung beziehungsweise Anweisungsinformation angezeigt werden. Beispielsweise kann mit einem Warnhinweis 16 die Information "Ausfall Bremssystem - Notverzögerung" angezeigt werden. Mit einem weiteren Warnhinweis 18 kann beispielsweise eine Information "Fahrzeug abstellen!" angezeigt werden. Des Weiteren kann mit einem Symbol 20 die in dem Fahrbahnabschnitt 16 erlaubte Geschwindigkeit angezeigt werden. Des Weiteren kann als Unterstützungsmaßnahme die aktuelle Geschwindigkeit des Fahrzeugs 2 mit einem Symbol 19 in dem Bild 9 eingeblendet werden.

Um nun, wie in diesem Beispiel erwähnt, das Notmanöver möglichst sicher beziehungsweise gefahrlos durchführen zu können, kann neben der abzufahrenden Sicherheits-Trajektorie 14 ein Haltepunkt 21 angezeigt werden. Der Haltepunkt 21 kann abhängig von Informationen 11, 12 und insbesondere von dem erfassten Umgebungsbereich 6 mithilfe der Auswerteeinheit 5 ermittelt beziehungsweise erzeugt werden. Somit wird mithilfe der Sicherheits-Trajektorie 14 der Nutzer von der aktuellen Position des Fahrzeugs 2 sicher zu dem Haltepunkt 21 navigiert. Der Haltepunkt 21 kann beispielsweise wiederum mit einem Haltepunkt-Hilfssymbol 22 als erweiterte Realität kontaktanalog in dem Bild 9 überlagert angezeigt werden. Zusätzlich oder anstatt kann ein weiteres Haltepunkt-Hilfssymbol 22 ebenfalls als erweiterte Realität in dem Bild 9 angezeigt werden, mit welchem vor allem ein Bereich für das Halten beziehungsweise Nothalten des Fahrzeugs 2 visuell dargestellt ist. Beispielsweise kann mithilfe des weiteren Haltepunkt-Hilfssymbols 23 ein Bereich am Straßenrand beziehungsweise am Fahrbahnrand, auf welchem das Fahrzeug 2 sicher abgestellt beziehungsweise geparkt werden kann, visuell dargestellt beziehungsweise eingeblendet werden.

In der Fig. 3 ist ein weiteres Ausführungsbeispiel der Erfindung dargestellt. Hierbei kann es nun sein, dass nicht das Fahrzeug 2 einen Fehlerfall beziehungsweise eine Notsituation aufweist, sondern dass das weitere Fahrzeug 13 in dem Umgebungsbereich 6 eine Notfallsituation, wie zum Beispiel ein fahruntüchtiger Fahrer oder ein defektes Bremssystem, aufweist. In diesem Fall kann wiederum die Gefahreninformation 12 beispielsweise mittels Car-2-Car-Kommunikation übermittelt werden, sodass insbesondere die umgebenden Fahrzeuge, wie in diesem Fall das Fahrzeug 2, über die Notsituation, wie beispielsweise ein durchzuführendes Nothaltemanöver des weiteren Fahrzeugs 13, in Kenntnis gesetzt werden.

Hierzu kann zum einen wiederum eine auf diese Notfallsituation des weiteren Fahrzeugs 3 gefahrenreduzierende Sicherheits-Trajektorie 14 erzeugt und mittels des Hilfssymbols 15 dargestellt werden. Hierzu kann beispielsweise visuell dem Nutzer des Fahrzeugs 2 dargestellt werden, dass er vor allem dem weiteren Fahrzeug 13 ausweichen soll.

In diesem Ausführungsbeispiel kann das weitere Fahrzeug 13 beispielsweise nicht mehr bremsen und ungebremst auf die vor dem Fahrzeug 2 befindliche Kreuzung sich bewegen. Hierbei kann beispielsweise mit einem weiteren Hilfssymbol 24, welches ebenfalls mittels der erweiterten Realität in dem Bild 9 dargestellt wird, angezeigt werden, aus welcher Richtung das weitere Fahrzeug 13 kommt. Beispielsweise kann mithilfe der Gefahren-Information 12 eine Positionsinformation und/oder eine Bewegungsrichtungsinformation bereitgestellt werden. Abhängig von diesen Informationen kann beispielsweise ein Positions-Hilfssymbol 25 und/oder ein Bewegungsrichtungs-Hilfssymbol 24 erzeugt werden. Diese Symbole 24, 25 können beispielsweise mittels der erweiterten Realität kontaktanalog in dem Bild 9 angezeigt beziehungsweise eingeblendet werden. Mit dem Bewegungsrichtungs-Hilfssymbol 24 wird die Richtung, aus welcher das weitere Fahrzeug 13 sich nähert, dargestellt. Mit dem Positions-Hilfssymbol 25 wird die aktuelle Position des Fahrzeugs 13 dargestellt. Anhand dieser Informationen kann sich der Nutzer des Fahrzeugs 2 auf diese Gefahr besser vorbereiten und entsprechend reagieren.

Des Weiteren kann in diesem Ausführungsbeispiel in der Fig. 3 mit dem Warnhinweis beziehungsweise Warninformation 17 die Information beziehungsweise die Aussage "Achtung kreuzendes Fahrzeug mit kritischem Fehler!" angezeigt werden. Mit dem Warnhinweis 18 kann hier die Information "unkontrolliertes Fahrzeug" im Bild 9 angezeigt werden. Mit dem Symbol 20 kann hier wiederum nun angezeigt werden, dass in diesem Kreuzungsbereich in diesem Beispiel vor Gefahren zu achten ist. Hierzu kann das Symbol 20 beispielsweise als Stoppsymbol oder als ein Überholverbotszeichen angezeigt werden, sodass der Nutzer beziehungsweise Fahrer des Fahrzeugs 2 noch mehr auf diese Gefahrensituation aufmerksam gemacht wird.

In der Fig. 4 ist nun wiederum ein weiteres Ausführungsbeispiel dargestellt, bei dem wiederum das weitere Fahrzeug 13 wiederum einen Fehler beziehungsweise eine Notfallsituation aufweist. Hierzu kann das Fahrzeug 13 wie bildhaft dargestellt auf einer entgegenkommenden Fahrbahn sich zum Fahrzeug 2 bewegen. Beispielsweise kann der Fahrer des Fahrzeugs 13 eingeschlafen sein oder beispielsweise bewusstlos sein. Diese Informationen können wiederum mithilfe der Gefahren-Information 12 zur Verfügung gestellt werden und mithilfe der Auswerteeinheit 5 verarbeitet. In diesem Fall kann zum einen mithilfe des Bewegungsrichtungs-Hilfssymbols 24 die Richtung beziehungsweise Bewegungsrichtung des Fahrzeugs 13 als erweiterte Realität in dem Bild 9 dargestellt werden, sodass dies der Fahrer des Fahrzeugs 2 sofort erblicken kann. Des Weiteren kann hier ein weiteres Hilfssymbol 26 in dem Bild 9 kontaktanalog mittels erweiterter Realität dargestellt beziehungsweise eingeblendet werden. Bei diesem weiteren Hilfssymbol 26 kann vor allem der von dem Fahrzeug 13 ausgehende, insbesondere aktuelle, Gefahrenbereich visuell dargestellt werden, sodass der Fahrer des Fahrzeugs 2 in Erfahrung erhält, welchen Bereich er möglichst meiden sollte, um eine potentielle Kollision mit dem Fahrzeug 13 zu vermeiden. Hierzu kann zusätzlich wiederum das Trajektorien-Hilfssymbol 15 eingeblendet werden, um insbesondere den Gefahrenbereich möglichst umfahren zu können und beispielsweise an der Halteposition 21 anhalten zu können, um dem Fahrzeug 13 aus dem Weg gehen zu können.

Des Weiteren kann in diesem Fall mithilfe der Hinweisinformation 18 als Information "unkontrolliertes Fahrzeug" in dem Bild 9 angezeigt werden. Mit der Hinweisinformation 17 kann die Information beziehungsweise die Aussage "Achtung entgegenkommendes Fahrzeug mit kritischem Fehler" ausgegeben werden. Des Weiteren kann wiederum mit dem Symbol 19 die aktuelle Geschwindigkeit und mit dem Symbol 20 ein Stoppschild angezeigt werden. Somit kann dem Fahrer des Fahrzeugs 2 eine bestmögliche Unterstützung für den auftretenden Fehlerfall des weiteren Fahrzeugs 13 und die daraus notwendigen Reaktionen nähergebracht beziehungsweise angezeigt werden.

### Bezugszeichenliste

- 1: Cockpit
- 2: Fahrzeug
- 3: Anzeigevorrichtung
- 4: Anzeigeeinheit
- 5: Auswerteeinheit
- 6: Umgebungsbereich
- 7: Windschutzscheibe
- 8: Erfassungseinheit
- 9: Bild
- 10: Fahrbahn
- 11, 12: Gefahreninformationen
- 13: weiteres Fahrzeug
- 14: Sicherheits-Trajektorie
- 15: Trajektorien-Hilfssymbol
- 16: Fahrbahnabschnitt
- 17, 18: Warnhinweise
- 19, 20: Symbole
- 21: Haltepunkt
- 22: Haltepunkt-Hilfssymbol
- 23: weiteres Haltepunkt-Hilfssymbol
- 24: Bewegungsrichtungs-Hilfssymbol
- 25: Positions-Hilfssymbol
- 26: weiteres Hilfssymbol

## Patentansprüche

1. Verfahren zum Anzeigen von Informationen auf einer Anzeigeeinheit (4) eines Fahrzeugs (2), wobei
- ein Umgebungsbereich (6) des Fahrzeugs (2) mit einer Erfassungseinheit (8) des Fahrzeugs (2) erfasst wird, und
- der erfasste Umgebungsbereich (6) zumindest bereichsweise auf der Anzeigeeinheit (4) angezeigt wird,
**dadurch gekennzeichnet, dass**
- eine Gefahren-Information (11) betreffend eines Zustands des Fahrzeugs (2) und/oder eine Gefahren-Information (12) betreffend eines Zustands zumindest eines weiteren Fahrzeugs (13) in dem Umgebungsbereich (6) bereitgestellt wird, wobei mit einer jeweiligen Gefahren-Information (11, 12) eine das Fahrzeug (2) potentiell betreffende Gefahr charakterisiert wird,
- abhängig von der bereitgestellten Gefahren-Information (11) des Zustands des Fahrzeugs (2) und/oder von der bereitgestellten Gefahren-Information (12) des Zustands des weiteren Fahrzeugs (13) und von dem erfassten Umgebungsbereich (6) eine abfahrbare Sicherheits-Trajektorie (14) , mit welcher die das Fahrzeug (2) potentiell betreffende Gefahr zumindest minimiert werden kann, erzeugt wird, und
- die Sicherheits-Trajektorie (14) in einem Bild (9) auf der Anzeigeeinheit (4), auf dem der Umgebungsbereich (6) angezeigt wird, zusätzlich angezeigt wird.

2. Verfahren nach Anspruch 1,
**dadurch gekennzeichnet, dass**
ein die Sicherheits-Trajektorie (14) charakterisierendes Trajektorien-Hilfssymbol (15) als erweiterte Realität kontaktanalog in dem Bild (9) auf der Anzeigeeinheit (4), auf der der Umgebungsbereich (6) mit einem Fahrbahnabschnitt(16) einer Fahrbahn (10), auf welcher sich das Fahrzeug (2) bewegt, überlagert angezeigt wird, insbesondere das Trajektorien-Hilfssymbol (15) kontinuierlich auf der Anzeigeeinheit (4), insbesondere einem Head-up-Display des Fahrzeugs (2), angezeigt wird.

3. Verfahren nach Anspruch 2,
**dadurch gekennzeichnet, dass**
das Trajektorien-Hilfssymbol (15) mittels der erweiterten Realität so auf der Anzeigeeinheit (4) dargestellt wird, dass die Sicherheits-Trajektorie (14) ortsfest auf dem angezeigten Fahrbahnabschnitt (16) der Fahrbahn (10) eingeblendet wird, sodass das Fahrzeug (2) das Trajektorien-Hilfssymbol (15) fiktiv überfährt.

4. Verfahren nach Anspruch 2 oder 3,
**dadurch gekennzeichnet, dass**
das Trajektorien-Hilfssymbol (15) auf der Anzeigeeinheit (4) mittels der erweiterten Realität so dargestellt wird, dass sich dieses vor dem Fahrzeug (2) auf dem angezeigten Fahrbahnabschnitt (16) der Fahrbahn (10) bewegungsgekoppelt zur Fortbewegungsfahrt des Fahrzeugs (2) mit dem Fahrzeug (2) mit bewegt.

5. Verfahren nach einem der vorhergehenden Ansprüche,
**dadurch gekennzeichnet, dass**
abhängig von der bereitgestellten Gefahren-Information (11) des Zustands des Fahrzeugs (2) und/oder von der bereitgestellten Gefahren-Information (12) des Zustands des weiteren Fahrzeugs (13) und von dem erfassten Umgebungsbereich (6) ein Haltepunkt (21), an welchem das Fahrzeug (2) durch Abfahren der Sicherheits-Trajektorie (14) sicher abgestellt werden kann, bestimmt wird, wobei ein den Haltepunkt (21) charakterisierendes Haltepunkt-Hilfssymbol (22, 23) als erweiterte Realität kontaktanalog in dem Bild (9) auf der Anzeigeeinheit (4) überlagert angezeigt wird.

6. Verfahren nach einem der vorhergehenden Ansprüche,
**dadurch gekennzeichnet, dass**
mit dem Zustand des Fahrzeugs (2) ein Fehlerfall zumindest eines Fahrzeugsystems des Fahrzeugs (2) charakterisiert wird, wobei die Gefahren-Information (11) des Zustands des Fahrzeugs (2) derart bestimmt wird, indem der Fehlerfall des zumindest einen Fahrzeugsystems des Fahrzeugs (2) beurteilt wird, insbesondere der Fehlerfall dahingehend beurteilt wird, ob eine Notfallsituation des Fahrzeugs (2) vorliegt, insbesondere zumindest ein Warnhinweis (17, 18) betreffend der Notfallsituation in dem Bild (9) auf der Anzeigeeinheit (4) zusätzlich angezeigt wird.

7. Verfahren nach einem der vorhergehenden Ansprüche,
**dadurch gekennzeichnet, dass**
mit dem Zustand des weiteren Fahrzeugs (13) eine Notfallsituation des weiteren Fahrzeugs (13) charakterisiert und mit der Gefahreninformation (12) bereitgestellt wird, wobei zumindest ein Warnhinweis (17, 18) betreffend der Notfallsituation in dem Bild (9) auf der Anzeigeeinheit (4) zusätzlich angezeigt wird.

8. Verfahren nach Anspruch 7,
**dadurch gekennzeichnet, dass**
mit der Gefahren-Information (12) des Zustands des weiteren Fahrzeugs (13) zusätzlich eine Positionsinformation und/oder eine Bewegungsrichtungsinformation des weiteren Fahrzeugs (13) bereitgestellt wird, wobei die Positionsinformation und/oder die Bewegungsrichtungsinformation in dem Bild (9) auf der Anzeigeeinheit (4) zusätzlich angezeigt wird, insbesondere ein die Positionsinformation charakterisierendes Positions-Hilfssymbol (25) und/oder ein die Bewegungsrichtungsinformation charakterisierendes Bewegungsrichtungs-Hilfssymbol (24) als erweiterte Realität kontaktanalog in dem Bild (9) auf der Anzeigeeinheit (4) überlagert angezeigt wird.

9. Anzeigevorrichtung (3) mit einer Anzeigeeinheit (4) und einer Auswerteeinheit (5), wobei die Anzeigevorrichtung (3) zum Durchführen eines Verfahrens nach einem der vorhergehenden Ansprüche ausgebildet ist.

10. Fahrzeug (2) mit einer Anzeigevorrichtung (3) nach Anspruch 9.
